# EUROPEAN PATENT SPECIFICATION

(11) **EP 2 693 245 B1**
(45) Date of publication and mention of the grant of the patent: **11.10.2017**
(21) Application number: 13178252.6
(22) Date of filing: 26.07.2013
(51) Int. Cl.: G02B 6/38

(54) **Connector**
Verbinder
Connecteur

(30) Priority: 31.07.2012 JP 2012169587
(43) Date of publication of application: 05.02.2014
(73) Proprietor: Tyco Electronics Japan G.K., Takatsu-ku Kawasaki Kanagawa 213-8535 (JP)
(72) Inventor: Shimoyasu, Takashi, Kawasaki-Shi, Kanagawa 213-8535 (JP); Yamada, Shinji, Kawasaki-Shi, Kanagawa 213-8535 (JP)
(74) Representative: Johnstone, Douglas Ian

(56) References cited:
- JP-A- 2006 071 888
- JP-A- 2009 258 568
- JP-A- 2010 091 929
- US-A1- 2009 275 228
- US-A1- 2013 189 871

## Description

### BACKGROUND OF THE INVENTION

### Field of the Invention

The present invention relates to a connector.

### Description of the Related Art

As a connector to mate with a mating component, there is known a connector including locking means for preventing disconnection from the mating component and releasing means for releasing locking. For example, JP 2005-173173A illustrates an optical connector which includes a device to release locking to an optical transmit and receive module. This optical connector includes a housing and a slide cover. The housing includes a lock lever. The slide cover includes an abutment section and an operation section. When the operation section of the slide cover is pulled by a finger to cause the slide cover to be slid rearward, the abutment section drives a locked section of the lock lever to release locking. The operation section of the slide cover is pulled in a direction of detaching the connector and thereby, the release of locking and the detachment of the connector are performed by one operation.

In addition, JP 2009-258568A also illustrates an optical connector including a housing and a cover. The housing includes a lock lever. The cover includes a pressing plate section and a remote operation lever. When the remote operation lever is operated, the pressing plate section drives a lock base section of the lock lever to release locking.

However, since the connectors illustrated in JP 2005-173173A and JP 2009-258568A are provided with components for releasing locking which are separate from the housings, the number of parts is large.

JP 2006-071888, on which the preamble of claim 1 is based, discloses a plug connector that mates with a mating connector. The plug connector includes a housing that has a main body which supports a pair of optical fibres. The housing has a lock arm which cantilevers from the main body and which has a locking projection at a distal end for locking the plug connector to the mating connector. A lock release tool extends from a front of the housing and through the main body. By pulling an end of the lock release tool which extends beyond the rear of the main body, the locking projection is disengaged from the mating connector releasing the plug connector from the mating connector.

### SUMMARY OF THE INVENTION

In view of the foregoing problem, the present invention has been made to provide a connector which has a reduced number of parts while making it possible to perform lock releasing and detaching by one operation.

A connector according to the present invention includes a housing arranged to support an information transmission member, a forward portion in a mating direction of which is arranged to be inserted into a mating component to mate with the mating component when the connector is mated with the mating component, wherein the housing includes: a main body which is arranged to support the information transmission member and comprises said forward portion in the mating direction which is arranged to be inserted into the mating component; a lock arm, a rear end of which is fixed more rearward in the mating direction than the portion to be inserted into the mating component, extends in a cantilever form in the mating direction up to a position where the lock arm is to be inserted into the mating component, and includes a locking projection rising up in an outward direction and arranged to lock to the mating component; and a lock release operation arm which extends from a front end of the lock arm in an opposite direction to the outward direction, the outward direction being substantially perpendicular to the mating direction, and the lock release operation arm further extends along the lock arm and apart from the lock arm in a rearward direction with respect to the mating direction to a position where the lock release operation arm projects from the main body, and is arranged to be pulled in the rearward direction to deflect the lock arm in the opposite direction so as to release locking by the locking projection to the mating component, and wherein the main body includes an inner wall surface which forms a gap which allows the lock release operation arm to pass through therein while containing the lock release operation arm therebetween, and facing the lock arm; and the main body and the lock arm are integrally molded; characterized in that the lock release operation arm is integrally molded with the main body and the lock arm; and when the lock release operation arm is pulled by a strength exceeding a predetermined strength in the rearward direction with respect to the mating direction to deflect the lock arm, the inner wall surface serves as a stopper for receiving abutment of a forward portion in the mating direction of the lock release operation arm.

In the connector according to the present invention, the lock release operation arm extends from the lock arm in the opposite direction to the locking projection, and further extends in the rearward direction with respect to the mating direction. Thus, the lock release operation arm is pulled in the direction opposite to the mating direction, and thereby the lock arm is deflected in an opposite direction with respect to the locking projection so that the locking is released. Accordingly, the release of the locking and detachment of the connector are performed by one operation. Moreover, since the lock release operation arm is integrally formed with the lock arm and the main body, the number of parts is reduced.

The lock release operation arm passes through the inside of the main body, so that a force of pulling the lock release operation arm acts on a center portion of the main body. It is prevented that the connector is inclined by the force of pulling when the connector is detached from the mating component.

The lock release operation arm abuts on the inner wall surface, so that it is prevented that the lock arm is excessively deformed.

The rear end of the lock arm may be fixed to the main body.

In addition, in the connector according to the present invention, it is preferable that the main body includes a guide groove which guides the lock release operation arm in the mating direction while preventing the lock release operation arm from floating to a side of the lock arm, and the lock release operation arm includes a guided projection which enters the guide groove to be guided by the guide groove.

The lock release operation arm is guided by the guide groove, so that the lock arm is deformed in an appropriate direction and also it is prevented that the lock release operation arm is unnecessarily deformed.

As described above, according to the present invention, a connector which has a reduced number of parts while making it possible to perform lock releasing and detaching by one operation is obtained.

### BRIEF DESCRIPTION OF THE DRAWINGS

FIG. 1 is a perspective front view illustrating an embodiment of the connector according to the present invention;
FIG. 2 is a perspective rear view illustrating the embodiment of the connector according to the present invention;
FIG. 3 is a plan view illustrating the embodiment of the connector according to the present invention;
FIG. 4 is a side view illustrating the embodiment of the connector according to the present invention;
FIG. 5 is a front view illustrating the embodiment of the connector according to the present invention;
FIG. 6 is a rear view illustrating the embodiment of the connector according to the present invention;
FIG. 7 is a perspective sectional view taken along the line 7-7 of the connector illustrated in FIG. 3;
FIG. 8 is a vertical sectional view taken along the line 7-7 of the connector illustrated in FIG. 3; and
FIG. 9 is a vertical sectional view illustrating a lock released state of the connector illustrated in FIG. 8.

### DETAILED DESCRIPTION

An embodiment of the connector of the present invention will be described with reference to the attached drawings in the followings.

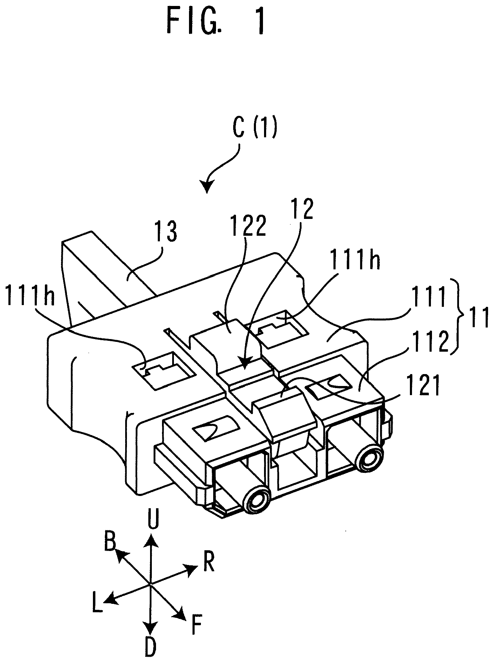

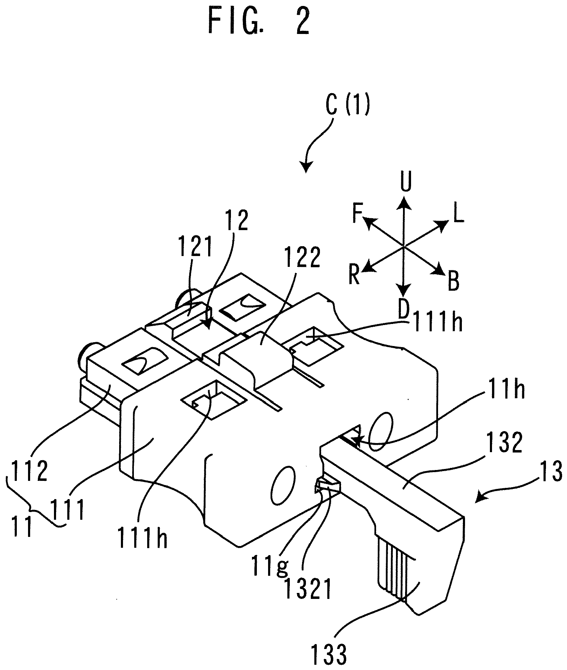

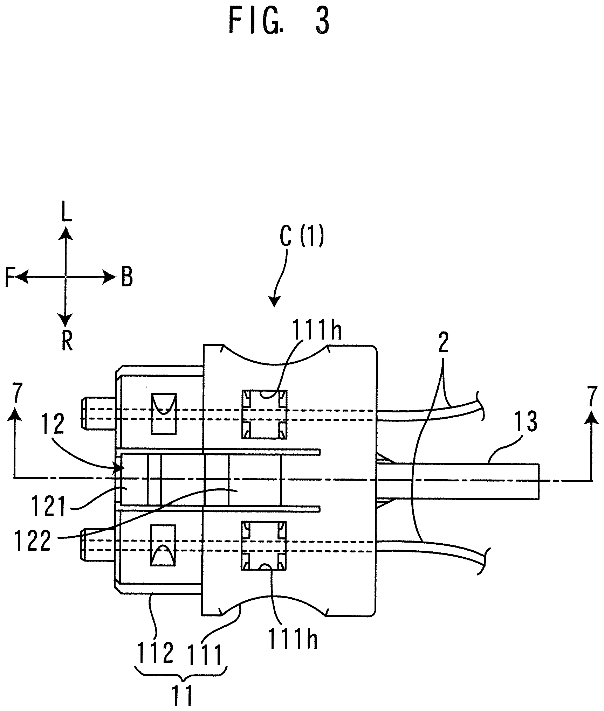

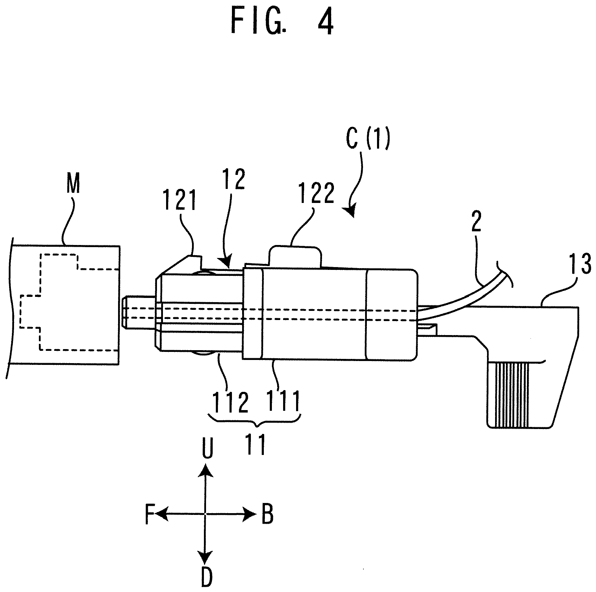

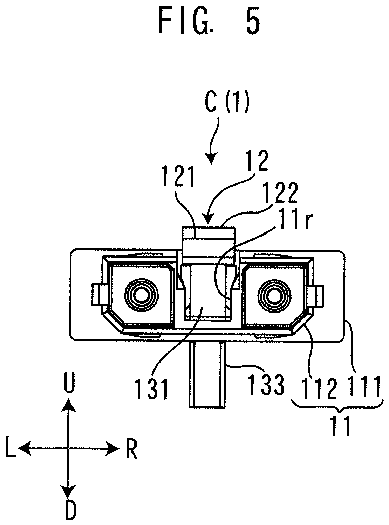

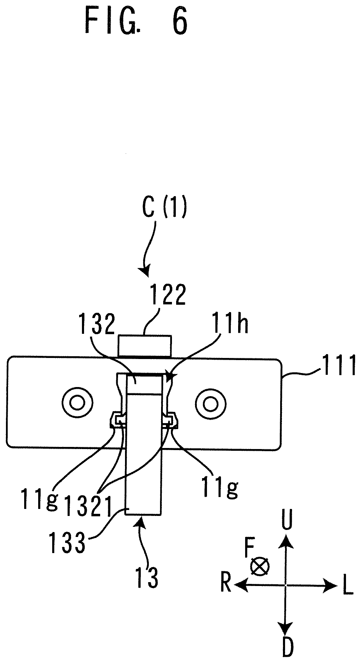

FIGS. 1 - 6 are views illustrating an embodiment of the connector according to the present invention. FIG. 1 is a perspective front view, and FIG. 2 is a perspective rear view. In addition, FIG. 3 is a plan view, and FIG. 4 is a side view. Further, FIG. 5 is a front view, and FIG. 6 is a rear view.

A connector C illustrated in FIGS. 1 - 6 is an optical connector for terminating optical cables 2. The optical cables 2 are illustrated in FIGS. 3 and 4. In addition, a part of an optical module M which is a mating component is illustrated in FIG. 4. The connector C is a plug-type connector which is inserted into and mates with the optical module M. A direction in which the connector C mates with the optical module M is referred to as a mating direction F (mating direction facing forward). In addition, a mating direction facing rearward, that is, a direction opposite to the mating direction F is referred to as a pullout direction B.

The connector C includes a housing 1. The housing 1 includes a main body 11, a lock arm 12 and a lock release operation arm 13. The housing 1 is a mold made of resin material. In other words, the main body 11, the lock arm 12 and the lock release operation arm 13 are integrally molded.

The main body 11 supports the two optical cables 2. The main body 11 includes a fixing section 111 to fix the optical cables 2 and an insertion section 112 which is provided more forward in the mating direction F than the fixing section 111 to be inserted into the optical module M. The two optical cables 2 are inserted into the main body 11 from a rear end surface in the mating direction F of the main body 11, and extend approximately in parallel with each other to pass through the fixing section 111 and the insertion section 112 in the mating direction F. Front ends of the two optical cables 2 are exposed outside at a front end of the insertion section 112. The fixing section 111 is provided with fixing openings 111h on routes of the optical cables 2. The optical cables 2 are fixed to the fixing section 111 via fixing metal members (not illustrated) which are inserted in the fixing openings 111h. Here, a direction in which the two optical cables 2 extending in the mating direction F are arranged side by side is referred to as a left direction L and a right direction R, and a direction including the left direction L and the right direction R is referred to as a left-right direction LR. In addition, directions perpendicular to both of the mating direction F and the left-right direction LR are referred to as an upward direction U and a downward direction D.

The main body 11 includes an arm groove 11r or a groove for arm 11r (see FIG. 5) and an arm opening 11h or an opening for arm 11h (see FIG. 6). The arm groove 11r is provided in a position between the two optical cables 2, more specifically, in an approximate center in the left-right direction LR of the main body 11. The arm groove 11r extends from the insertion section 112 up to a midpoint of the fixing section 111 in the mating direction F. The arm opening 11h continues to the arm groove 11r and extends up to a rear end surface of the fixing section 111. The lock arm 12 and the lock release operation arm 13 are provided in the arm groove 11r. In addition, the lock release operation arm 13 passes through the arm opening 11h.

A rear end of the lock arm 12 is fixed more rearward in the mating direction F than the insertion section 112 which is inserted in the optical module M. In other words, the lock arm 12 includes the rear end thereof fixed to the fixing section 111, and extends in a cantilever form up to a position where the lock section 111 or insertion section 112 is inserted into the optical module M in the mating direction F. The lock arm 12 extends, as illustrated in FIG. 4, along a side surface of the insertion section 112 (an upper surface of the insertion section 112 in FIG. 4). A locking projection 121 which rises up in the upward direction U intersecting the mating direction F, that is, outward is provided in the front end of the lock arm 12. The locking projection 121 has a hook form and is a part to lock to the optical module M. The locking projection 121 projects more upward than the insertion section 112 in the upward direction U. In addition, a release projection 122 projecting outward, that is, in the upward direction U, similarly to the locking projection 121, is provided in a midpoint of the lock arm 12. The release projection 122 projects more upward than the fixing section 111.

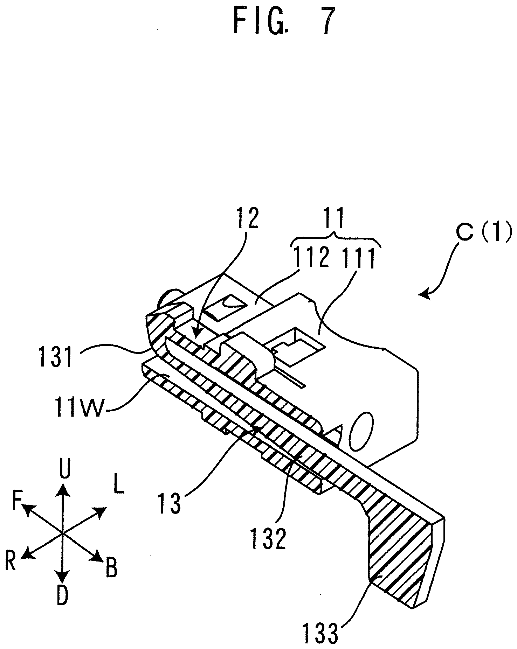

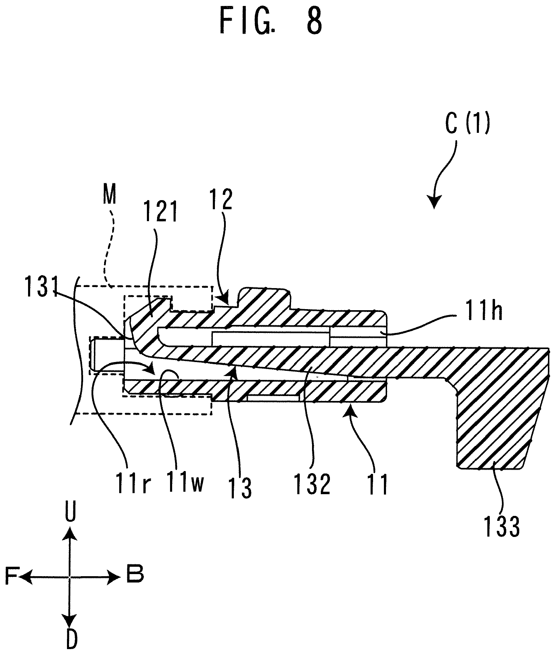

FIG. 7 is a perspective sectional view taken along the line 7-7 of the connector illustrated in FIG. 3. In addition, FIG. 8 is a vertical sectional view taken along the line 7-7 of the connector illustrated in FIG. 3. FIG. 8 also illustrates the optical module M in the state of being mated with the connector.

The lock release operation arm 13 extends from the front end of the lock arm 12 in a direction opposite to the outward direction, that is, in the downward direction D, and then extends along the lock arm 12 while being apart from the lock arm 12, rearward in the mating direction F, that is, in the pullout direction B. The lock release operation arm 13 extends from the main body 11 up to a position where the lock release operation arm 13 projects in the pullout direction B. More specifically, the lock release operation arm 13 includes an offset section 131, an arm section 132 and a knob section 133. The offset section 131 extends from the front end of the lock arm 12 in the downward direction D opposite to the direction in which the locking projection 121 projects. The arm section 132 extends from a tip of the offset section 131 in the pullout direction B. The knob section 133 is provided in a tip end in the pullout direction B of the arm section 132, and projects in a hook form in the downward direction D. The knob section 133 is provided in a position away from the main body 11 in the pullout direction B.

The lock release operation arm 13 is arranged in the arm groove 11r and the arm opening 11h which are formed in the main body 11. The lock release operation arm 13 penetrates in the mating direction F an approximate center of the main body 11 provided with the arm opening 11h. Alternatively, the lock release operation arm 13 extends in the mating direction F through the arm opening 11h which is in an approximate center of the main body 11. An inner wall surface 11w facing the lock arm 12 across the lock release operation arm 13 therebetween of the arm groove 11r and the arm opening 11h which are formed in the main body 11 forms a gap between the inner wall surface 11w and the lock release operation arm 13 through which gap the lock release operation arm 13 is allowed to pass through. In addition, as illustrated in FIG. 6, a pair of guide grooves 11g guide the lock release operation arm 13 in the mating direction F in inner walls of the arm opening 11h of the main body 11. The guide grooves 11g are provided on both inner wall surfaces in the left-right direction of the arm opening 11h and extend in the mating direction. In addition, as illustrated in FIGS. 2 and 6, the arm section 132 of the lock release operation arm 13 includes a pair of guided projections 1321 entering the guide grooves 11g. The pair of guided projections 1321 project from the arm section 132 in the left-right direction LR. The lock release operation arm 13 is guided by the guide grooves 11g, so that the lock release operation arm 13 moves in the mating direction without inclining in the up-down direction UD.

### [Mating of the connector]

When the connector C illustrated in FIG. 4 is mated with the optical module M, the insertion section 112 of the main body 11 is inserted into the optical module M. At this moment, the lock arm 12 is also inserted into the optical module M. The locking projection 121 of the lock arm 12 is pressed down by the optical module M, so that the lock arm 12 is once elastically deformed in the downward direction D. As illustrated in FIG. 8, in a state in which the connector C is completely mated with the optical module M, the locking arm 12 recovers from the elastic deformation and the locking projection 121 locks to the optical module M. The lock arm 12 enters in the state of locking to the optical module M, and the connector C is prevented from being pulled out with respect to the optical module M.

### [Pulling out the connector]

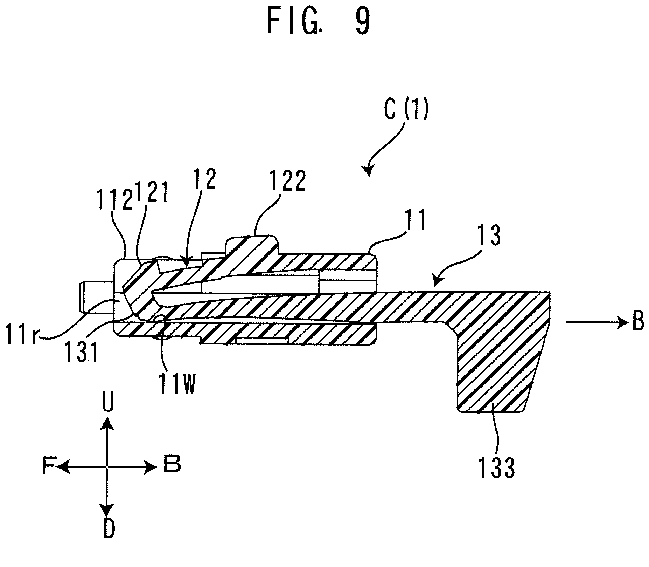

FIG. 9 is a vertical sectional view illustrating a lock released state of the connector illustrated in FIG. 8.

When the connector C is attempted to be pulled out of the optical module M, the knob section 133 of the lock release operation arm 13 is held by fingers, and an operation of pulling in the pullout direction B is performed. The lock release operation arm 13 is linked to the front end of the lock arm 12, and is arranged lower than the lock arm 12 in the downward direction D. Thus, the lock release operation arm 13 receives the operation of pulling in the pullout direction B to deflect the locking arm in the downward direction D. As a result, the lock arm 12 releases the locking by the locking projection 121 to the optical module M.

As illustrated in FIG. 9, when the lock release operation arm 13 is pulled in the pullout direction B, and the locking projection 121 is moved backward up to the side surface of the insertion section 112 (the upper surface of the insertion section 112 in FIG. 9), the offset section 131 arranged forward in the mating direction of the lock release operation arm 13 abuts on the inner wall surface 11w of the arm groove 11r. The inner wall surface 11w receives the abutment of the lock release operation arm 13, and functions as a stopper (anti-overstress) to prevent the lock arm 12 from being further deformed in the downward direction D. Accordingly, the lock arm 12 is prevented from being excessively deformed.

When the knob section 133 is further pulled in the pullout direction B while being held by the fingers, the connector C which has been released from the state of being locked is pulled out of the optical module M. For the connector C of the present embodiment, release of the locking state of the connector C to the optical module M and detaching of the connector C are performed by one operation of pulling the knob section 133 of the lock release operation arm 13 in the pullout direction B.

The lock release operation arm 13 is arranged in a position interposed between the inner wall surface 11w and lock arm 12. In other words, the lock release operation arm 13 is provided inside the main body 11. For this reason, a force to pull out the lock release operation arm 13 in the pullout direction B acts on the approximate central portion in the up-down direction UD and the left-right direction LR of the main body 11. Accordingly, an inclination of the connector when being pulled out is prevented.

In addition, the lock release operation arm 13 is guided by the guide grooves 11g (see FIG. 6) in the pullout direction B. For this reason, even in a case in which the lock release operation arm 13 is pulled in a direction inclined with respect to the pullout direction B, the lock release operation arm 13 is prevented from being deformed.

Incidentally, in the connector C of the present embodiment, it is possible to release locking of the lock arm 12 also by directly pushing down the release projection 122 of the lock arm 12 in the downward direction D. However, for example, in such a case in which other modules or electronic components are arranged close to the optical module M, it is difficult to operate the release projection 122 while holding the release projection 122 with fingers from both sides in the up-down direction UD. In the connector C of the present embodiment, the lock release operation arm 13 projects more than the main body 11 in the pullout direction B. Since only the lock release operation arm 13 and the optical cables are present on a side of the pullout direction B more than the main body 11, it is easy to operate the lock release operation arm 13 by fingers. In addition, since the knob section 133 projects in the hook form from the lock release operation arm 13, it is possible to pull the knob section 133 in the pullout direction B by putting fingers on the knob section 133.

In addition, in the above-described embodiment, as an example of the connector according to the present invention, a connector which supports two optical cables is described. However, the present invention is not limited to this but to the scope of the invention as defined by the appended claims. For example, the number of optical cables may be single or three or more.

In addition, in the above-described embodiment, as an example of the mating component for use with the present invention, the optical module M in which the an optical transmit and receive device is housed is described. However, the mating component may be some other form of component, such as, a connector which supports an optical cable.

Further, in the above-described embodiment, as an example of the connector, an optical connector which supports optical cables as an information transmission member is described. However, the present invention is not limited to this but to the scope of the invention as defined by the appended claims. The connector may be, for example, an electrical connector which supports electrical wires as an information carrying member. Here, the electrical wires may carry electrical signals or may carry electrical power.

## Claims

1. A connector (C) including a housing (1) arranged to support an information transmission member (2), a forward portion (112) in a mating direction (F) of which is arranged to be inserted into a mating component (M) to mate with the mating component (M) when the connector (C) is mated with the mating component (M), wherein
the housing (1) includes:
a main body (11) which is arranged to support the information transmission member (2) and comprises said forward portion (112) in the mating direction (F) which is arranged to be inserted into the mating component (M);
a lock arm (12), a rear end of which is fixed more rearward in the mating direction (F) than the portion to be inserted into the mating component (M), extends in a cantilever form in the mating direction (F) up to a position where the lock arm (12) is to be inserted into the mating component (M), and includes a locking projection (121) rising up in an outward direction (U) and arranged to lock to the mating component (M); and
a lock release operation arm (13) which extends from a front end of the lock arm (12) in an opposite direction (D) to the outward direction (U), the outward direction (U) being substantially perpendicular to the mating direction (F), and the lock release operation arm (13) further extends along the lock arm (12) and apart from the lock arm (12) in a rearward direction (B) with respect to the mating direction (F) to a position where the lock release operation arm (13) projects from the main body (11), and is arranged to be pulled in the rearward direction (B) to deflect the lock arm (12) in the opposite direction (D) so as to release locking by the locking projection (121) to the mating component (M), and wherein
the main body (11) includes an inner wall surface (11w) which forms a gap which allows the lock release operation arm (13) to pass through therein while containing the lock release operation arm (13) therebetween, and facing the lock arm (12); and
the main body (11) and the lock arm (12) are integrally molded;
**characterized in that**
the lock release operation arm (13) is integrally molded with the main body (11) and the lock arm (12); and
when the lock release operation arm (13) is pulled by a strength exceeding a predetermined strength in the rearward direction (B) with respect to the mating direction (F) to deflect the lock arm (12), the inner wall surface (11w) serves as a stopper for receiving abutment of a forward portion in the mating direction (F) of the lock release operation arm (13).

2. The connector according to claim 1, wherein the rear end of the lock arm (12) is fixed to the main body (11).

3. The connector according to claim 1 or 2, wherein
the main body (11) includes a guide groove (11g) which is arranged to guide the lock release operation arm (13) in the mating direction (F) while preventing the lock release operation arm (13) from floating to a side of the lock arm (12), and
the lock release operation arm (13) includes a guided projection (1321) which is arranged to enter the guide groove (11g) so as to be guided by the guide groove (11g).

## Patentansprüche

1. Verbinder (C) mit einem Gehäuse (1), das zum Lagern eines Informationsübertragungselements (2) ausgelegt ist, von dem ein in einer Zusammensteckrichtung (F) vorderer Abschnitt (112) zum Einführen in eine Gegenkomponente (M) zum Zusammenstecken mit der Gegenkomponente (M) ausgelegt ist, wenn der Verbinder (C) mit der Gegenkomponente (M) zusammengesteckt wird, wobei
das Gehäuse (1) Folgendes beinhaltet:
einen Hauptkörper (11), der zum Lagern des Informationsübertragungselements (2) ausgelegt ist und den genannten in der Zusammensteckrichtung (F) vorderen Abschnitt (112) umfasst, der zum Einführen in die Gegenkomponente (M) ausgelegt ist;
einen Sperrarm (12), von dem ein hinteres Ende in der Zusammensteckrichtung (F) weiter hinten befestigt ist als der Abschnitt, der in die Gegenkomponente (M) eingeführt wird, der in Form einer Auskragung in der Zusammensteckrichtung (F) bis zu einer Position verläuft, in der der Sperrarm (12) in die Gegenkomponente (M) eingeführt wird, und der einen Sperrvorsprung (121) aufweist, der in einer Auswärtsrichtung (U) ansteigt und zum Sperren an der Gegenkomponente (M) ausgelegt ist; und
einen Sperrfreigabebetriebsarm (13), der von einem vorderen Ende des Sperrarms (12) in einer entgegengesetzten Richtung (D) zur Auswärtsrichtung (U) verläuft, wobei die Auswärtsrichtung (U) im Wesentlichen lotrecht zur Zusammensteckrichtung (F) ist, und der Sperrfreigabebetriebsarm (13) weiter entlang dem Sperrarm (12) und getrennt von dem Sperrarm (12) in einer Rückwärtsrichtung (B) mit Bezug auf die Zusammensteckrichtung (F) in eine Position verläuft, in der der Sperrfreigabebetriebsarm (13) vom Hauptkörper (11) vorsteht, und zum Ziehen in der Rückwärtsrichtung (B) ausgelegt ist, um den Sperrarm (12) in der entgegengesetzten Richtung (D) abzulenken, um die Sperrung durch den Sperrvorsprung (121) an der Gegenkomponente (M) freizugeben, und wobei
der Hauptkörper (11) eine Innenwandfläche (11w) aufweist, die eine Lücke bildet, die es zulässt, dass der Sperrfreigabebetriebsarm (13) durch sie passiert, während sich der Sperrfreigabebetriebsarm (13) dazwischen befindet, und dem Sperrarm (12) zugewandt ist; und
der Hauptkörper (11) und der Sperrarm (12) einstückig geformt sind;
**dadurch gekennzeichnet, dass**
der Sperrfreigabebetriebsarm (13) einstückig mit dem Hauptkörper (11) und dem Sperrarm (12) geformt ist; und
wenn der Sperrfreigabebetriebsarm (13) mit einer Kraft gezogen wird, die eine vorbestimmte Kraft in der Rückwärtsrichtung (B) mit Bezug auf die Zusammensteckrichtung (F) übersteigt, um den Sperrarm (12) abzulenken, dann dient die Innenwandfläche (11w) als Anschlag zum Aufnehmen der Anlage eines vorderen Abschnitts in der Zusammensteckrichtung (F) des Sperrfreigabebetriebsarms (13).

2. Verbinder nach Anspruch 1, wobei das hintere Ende des Sperrarms (12) am Hauptkörper (11) befestigt ist.

3. Verbinder nach Anspruch 1 oder 2, wobei
der Hauptkörper (11) eine Führungsnut (11g) aufweist, die zum Führen des Sperrfreigabebetriebsarms (13) in der Zusammensteckrichtung (F) ausgelegt ist und dabei ein Schweben des Sperrfreigabebetriebsarms (13) zu einer Seite des Sperrarms (12) verhindert, und
der Sperrfreigabebetriebsarm (13) einen geführten Vorsprung (1321) aufweist, der zum Eintreten in die Führungsnut (11g) ausgelegt ist, um von der Führungsnut (11g) geführt zu werden.

## Revendications

1. Connecteur (C) incluant un logement (1) agencé de façon à soutenir un élément de transmission d'informations (2), une portion frontale (112) dans un sens d'accouplement (F) laquelle est agencée de façon à être insérée dans un composant d'accouplement (M) pour être accouplée avec le composant d'accouplement (M) lorsque le connecteur (C) est accouplé avec le composant d'accouplement (M), cas dans lequel
le logement (1) inclut :
un corps principal (11) qui est agencé de façon à soutenir l'élément de transmission d'informations (2) et comprend ladite portion frontale (112) dans le sens d'accouplement (F) qui est agencée de façon à être insérée dans le composant d'accouplement (M) ;
un bras de verrouillage (12), dont une extrémité arrière est fixée davantage en arrière dans le sens d'accouplement (F) que la portion destinée à être insérée dans le composant d'accouplement (M), s'étend suivant une forme en porte-à-faux dans le sens d'accouplement (F) jusqu'à une position où le bras de verrouillage (12) est destiné à être inséré dans le composant d'accouplement (M), et inclut une saillie de verrouillage (121) laquelle remonte suivant un sens vers l'extérieur (U) et est agencée de façon à se verrouiller au composant d'accouplement (M) ; et
un bras d'actionnement de libération de verrouillage (13) qui s'étend à partir d'une extrémité avant du bras de verrouillage (12) dans un sens opposé (D) au sens vers l'extérieur (U), le sens vers l'extérieur (U) étant sensiblement perpendiculaire au sens d'accouplement (F), et le bras d'actionnement de libération de verrouillage (13) s'étend en outre le long du bras de verrouillage (12) et séparément du bras de verrouillage (12) dans un sens vers l'arrière (B) par rapport au sens d'accouplement (F) jusqu'à une position où le bras d'actionnement de libération de verrouillage (13) fait saillie à partir du corps principal (11), et est agencé de façon à être tiré dans le sens vers l'arrière (B) afin de faire dévier le bras de verrouillage (12) dans le sens opposé (D) de sorte à libérer le verrouillage par la saillie de verrouillage (121) au niveau du composant d'accouplement (M), et cas dans lequel
le corps principal (11) inclut une surface de paroi interne (11w) qui forme un espacement qui permet au bras d'actionnement de libération de verrouillage (13) de le traverser tout en contenant le bras d'actionnement de libération de verrouillage (13) entre ces postes, et en faisant face au bras de verrouillage (12) ; et
le corps principal (11) et le bras de verrouillage (12) sont moulés d'un seul tenant ;
**caractérisé en ce que**
le bras d'actionnement de libération de verrouillage (13) est moulé d'un seul tenant avec le corps principal (11) et le bras de verrouillage (12) ; et
lorsque le bras d'actionnement de libération de verrouillage (13) est tiré par une force dépassant une force prédéterminée dans le sens vers l'arrière (B) par rapport au sens d'accouplement (F) afin de faire fléchir le bras de verrouillage (12), la surface de paroi interne (11w) sert d'arrêt pour recevoir la mise en butée d'une portion frontale dans le sens d'accouplement (F) du bras d'actionnement de libération de verrouillage (13).

2. Connecteur selon la revendication 1, l'extrémité arrière du bras de verrouillage (12) étant fixée au corps principal (11).

3. Connecteur selon la revendication 1 ou 2,
le corps principal (11) incluant une rainure de guidage (11g) qui est agencée de façon à guider le bras d'actionnement de libération de verrouillage (13) dans le sens d'accouplement (F) tout en empêchant le bras d'actionnement de libération de verrouillage (13) de flotter vers un côté du bras de verrouillage (12), et
le bras d'actionnement de libération de verrouillage (13) incluant une saillie guidée (1321) qui est agencée de façon à entrer dans la rainure de guidage (11g) de sorte à être guidée par la rainure de guidage (11g).
